# EUROPEAN PATENT SPECIFICATION

(11) **EP 0 478 095 B1**
(45) Date of publication and mention of the grant of the patent: **18.09.1996**
(21) Application number: 91203161.4
(22) Date of filing: 30.10.1987
(51) Int. Cl.: A01C 7/08, A01B 73/04, A01B 49/06

(54) **A soil cultivating machine for the preparation of a seed bed**
Bodenbearbeitungsmaschine zur Saatbettherrichtung
Machine à travailler le sol pour la préparation du lit de semence

(30) Priority: 04.11.1986 NL 8602785; 03.02.1987 NL 8700254; 25.02.1987 NL 8700466
(43) Date of publication of application: 01.04.1992
(62) Divisional of application: 87202100.1
(73) Proprietor: C. van der Lely N.V., NL-3155 PD Maasland (NL)
(72) Inventor: van der Lely, Ary, NL-3155 PD Maasland (NL); Bom, Cornelis Johannes Gerardus, NL-3181 VC Rozenburg (NL)
(74) Representative: Mulder, Herman

(56) References cited:
- DE-A- 2 519 760
- GB-A- 1 097 351
- NL-A- 6 700 938

## Description

The present invention relates to a soil cultivating machine for the preparation of a seed bed, comprising a seed container and a central frame portion, to which two carrier beams are coupled, each carrying a set of seed pipes, which carrier beams are pivotable about horizontal axes extending in the direction of operative travel (A) between an operative and an inoperative position, and which carrier beams, in said operative position, are aligned horizontally and extend transversely to the direction of operative travel (A), said machine further being provided with two distributing mechanisms, each being connected to said container by means of a supply tube and each being capable of distributing seed through flexible tubes to one of the sets of seed pipes of a respective carrier beam.

A suchlike machine is known from the DE-A 2519760. The machine described herein comprises distributing members connected to a hopper disposed closely in front of the carrier beams and centrally above the set of carrier beams. According to this document it would be possible to reduce the working width of the machine, assumably by deflecting an outer carrier beam around an axis extending in the operative direction. However, the upward deflection of a carrier beam would in this construction ultimately be limited by the fixed position of the distributing members. In practice such a deflection would also be limited due to adverse tangling of the flexible tubes connecting each distributing member with the respective seed pipes. It is the object of the invention to achieve a construction for the above described type of machine, enabling transportation over public roads, and a construction of which the carrier beams can be deflected advantageously without the said limitations. According to the invention, this can be achieved in that each distributing mechanism is pivotally associated to one of said carrier beams by means of a pivot axis which extends parallel to the carrier beam, and in that adjusting means are provided for tilting said distribution mechanism about said pivot axis in a direction perpendicular to its associated carrier beam so as to enable said carrier beam being raised into its substantially vertical transport position without the distributing mechanisms contacting other machine parts.

The above described construction renders possible a transport position in which the carrier beams are folded upwardly relatively closely to each other, so that the total transporting width of the machine can be reduced significantly, even virtually within most of the customary and permitted widths of a leading tractor or suchlike vehicle.

Another aspect of the invention concerns the possibility in which each carrier beam is coupled to a respective lateral frame portion, which lateral frame portion is pivotably connected to the central frame portion. Such renders possible a relatively rigid and sturdy construction. In such a construction, according to the invention, each distributing mechanism is mounted on a respective lateral frame portion.

Yet another favourable possibility for compactly folding the machine, which can be combined with the already mentioned constructive steps, is, according to the invention, comprised in that the distributing mechanisms are, taken in a direction transversely to the direction of operative travel, each disposed at a different distance relative to a mirror plane between the two carrier beams. Also, the machine may comprise a rotary harrow disposed in front of the seed pipes and connected to the frame parts laterally connected to the central frame part.

For a better understanding of the invention and to show how the same may be carried into effect, reference will now be made, by way of example, to the accompanying drawings, in which:
Figure 1 is a schematical plan view of a soil cultivating machine according to the invention, which machine comprises two mutually transport-foldable carriers for the soil working members and is combined with an implement for introducing material into the soil, in particular a seed drill;
Figure 2 is a side view of the assembly shown in Figure 1;
Figure 3 is, to an enlarged scale, a view taken in the direction of the arrow III in Figure 1, showing, in a second embodiment of the machine, the support of the seed pipes of a seed drill, and
Figure 4 is a view taken in the direction of the arrow IV in Figure 3.

The implement shown in the drawings concerns a soil cultivating machine, in particular one for the preparation of a seed bed. The machine comprises a frame beam 1 which extends transversely to the direction of operative travel A and is located at least substantially horizontally. The frame beam 1 consists of three portions which are in alignment and are pivotably interconnected by means of pins 2 extending in the direction of operative travel A. The central portion is provided with a trestle 3 having a three-point connection for coupling to the three-point lifting hitch of a tractor. Between the outer portions and the trestle 3 there are provided hydraulical adjusting cylinders 4, by means of which said outer portions can be folded relative to said central portion about the pins 2. At the ends facing away from each other, the outer portions of the frame beam 1 are each provided with a ground wheel 5 which is adjustable in height by means of a threaded spindle. Furthermore, each of the outer portions of the frame beam 1 is provided near its end with a hinged parallelogram construction 7, by means of which a carrier 8 is arranged movably in height relative to the portions. Each parallelogram construction 7 comprises two arms, which are superposed and are pivotably mounted on an upwardly directed plate arranged at the upper side of a carrier 8. Each of the carriers 8, which are in alignment, supports at least substantially vertical shafts of soil working members 12, which shafts are interspaced equidistantly at preferably 25 cms.

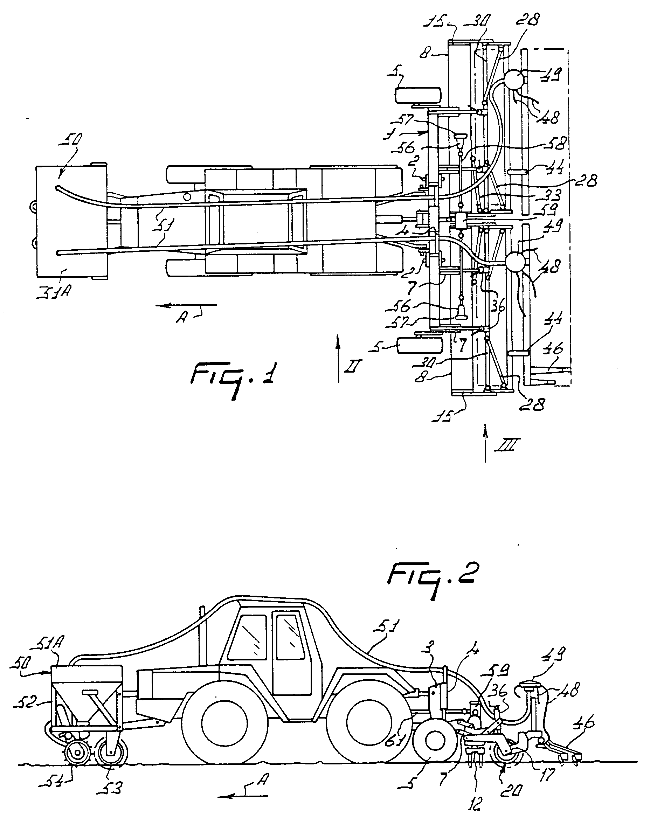

The end of each of the respective carriers 8 is closed by means of an upwardly directed plate 15 extending at least substantially parallel to a vertical plane in the direction of operative travel A of the machine. Near its front side, each of the plates 15 is provided with a pin extending transversely to the direction of operative travel A, the arrangement being such that the pins are in alignment. About each pin there is freely pivotable an arm 17, which arm extends rearwardly along the outer side of the plate 15. Each arm 17 has a front portion which extends at least substantially horizontally and merges into a portion 19 extending obliquely downwardly and rearwardly. Between the ends of the portions 19 there is arranged freely rotatably a roller 20 by means of shafts 21 supported in bearing housings. In this embodiment, the roller 20 is designed as a packer roller with scraper members 24. Each of the scraper members 24 is provided at a lower end of an obliquely upwardly and rearwardly extending arm 25. The arms 25 are mounted together on a carrier or beam 26, which extends at least substantially parallel to the axis of rotation of the roller 20. The carrier 26 is arranged near the upper ends of hook-shaped arms 27 which, by means of their other, forwardly directed ends, are freely rotatable about the shafts 21 of the roller 20. By means of a pair of lugs and a pin extending in the direction of operative travel A, there is arranged between the arms 17 an end of a cross beam or carrier 30, which beam extends at least substantially parallel to the axis of rotation of the roller 20. The cross beam 30 together with the arms 17 constitutes a carrier construction for the roller 20. At the front portions of the arms 17, which during operation are located at the facing ends of the rollers 20, there is arranged movably in front of the cross beam 30 an end of a stabilizer rod 33 (Figure 1) by means of a lug and a pin. The other end of the stabilizer rod 33 is arranged movably about a vertical pin provided near the centre at the rear side of a carrier 8. The length of the stabilizer rod 33 is adjustable.

The front portions of the arms 17 are each provided with a guide means, which are located at the inner sides and co-operate with the rear sides of the plates 15. By means of a horizontal pin, mounted to the carrier 30 and extending transversely to the direction of operative travel A, there is arranged freely movably a threaded spindle 36, which spindle is also connected to a carrier 8. By means of the spindle 36 the working depth of a carrier 8 relative to a roller can be adjusted. The upper end of each hook-shaped arm 27 is provided with a rod 28 which is arranged movably by means of a pin. The other end of the rod 28 is mounted near the threaded spindle 36 on the cross beam 30 by means of a pin (Figure 1). The length of the rod 28 is adjustable.

On each carrier 26 for the scraper members 24 of a roller 20 there are arranged at equal distance from the ends rearwardly extending brackets 44, on which is mounted a carrier beam 45 which extends transversely to the direction of operative travel A and over the entire width of the roller 20 (Figure 1). The carrier beam 45 is located at least substantially parallel to the carrier 26. On the carrier beam 45 there are arranged side by side seed pipes 46, which at their lower ends are provided with sowing shoes. Seen transversely to the direction of operative travel A of the machine, the sowing shoes are arranged in staggered relationship relative to each other and are provided at the rear side with resilient tines. By means of a flexible tube 48, each of the seed pipes 46 is connected to a distributing mechanism 49 of a pneumatical seed drill 50. As is apparent from Figure 1, seen in the direction of operative travel A of the machine, the distributing mechanisms 49 are mounted on each of the two rightmost brackets 44. By means of a supply tube 51 which near the upper side of the trestle 3 is supported on the frame beam 1 and which furthermore, when the machine is coupled, is passed to the front over the top side of the tractor, each of the distributing mechanisms 49 is connected to a fan and a container 51A. The container 51A and the fan are mounted on a frame 52 arranged at the lifting hitch at the front side of the tractor. During operation, the frame 52 is supported by a roller 53 which extends transversely to the direction of operative travel A and may be designed as a packer roller. The fan may be driven from the power take-off shaft at the front side of the tractor, while a supply mechanism for the supply of seed material from the container is driven by means of a wheel 54 rolling over the ground.

Within each of the carriers 8 there is mounted on the shafts of the respective soil working members 12 a pinion, the arrangement being such that the pinions on the shafts of adjacent soil working members are in driving connection with each other. Near the centre, the shaft of a soil working member 12 is extended and reaches by means of this extension to into a gear box 56. Inside the gear box 56, the extension is in driving connection via a bevel gear transmission with a shaft which extends transversely to the direction of operative travel A and is bearing-supported therein, which shaft is in driving connection via a speed variator 57 located at the outer side of the gear box with a shaft which also extends transversely to the direction of operative travel A and projects beyond the gear box at the other side. By means of telescopic shafts 58 provided with universal joints, the relevant shafts are connected to the ends of a shaft which also extends transversely to the direction of operative travel A and is bearing-supported in a gear box 59 mounted on a bracket located at the rear side of the central portion of the frame beam 1. Inside the gear box 59, the shaft extending transversely to the direction of operative travel A is in driving connection via a bevel gear transmission with a shaft which extends in the direction of operative travel A and projects beyond the gear box both at the front side and at the rear side. The end of the shaft projecting at the front side is connected to the power take-off shaft of the tractor by means of an intermediate shaft 61. The construction described in the foregoing operates as follows.

During operation of the above-described combination, the implement is coupled to the three-point lifting hitch of the tractor by means of the trestle 3 and from the power take-off shaft via the intermediate shaft 61 and the above-described transmission there is obtained such a drive for the soil working members 12 that adjacent soil working members are rotated in opposite directions and thereby cultivate by means of their soil working elements at least adjoining strips of soil.

During operation, the respective frame portions of the frame beam assume a fixed position relative to each other by means of a locking means (not shown in further detail). Upon movement in the direction of the arrow A, the machine rests on the ground by means of the height-adjustable ground wheels 5. With the aid of the spindle 36 and the rollers 20 located behind the soil working members 12, which rollers, as stated above, each are designed as a packer roller, it is possible to set the working depth of the soil working members 12 prior to starting the job. This setting can be effected by means of the adjusting devices provided on the cross beam 30 and constituted by the threaded spindles 36, which adjusting devices are movably connected to the rear side of a carrier 8 by means of connecting strips constituting a guide for a carrier 8.

The distributing mechanisms 49 and the seed pipes 46 of the seed drill 50 are mounted on a carrier 26 which is supported by means of the hook-shaped arms 27 which is freely movable about the shafts 21 of the packer rollers 20. In this connection, the free movability is limited by means of the rods 28. Upon a change in the working depth of the soil working members 12, it is possible to effect an after-setting of the seed pipes 46 and the scraper members 24. During a movement of a carrier 8 upwardly, this movement is also passed through the parallelogram constructions 7 at the front side. In this manner there is obtained a movement in upward direction, while there is hardly any change in the position of the soil working members nor in the working. In order to bring the machine in a transport position, it is possible to fix the parallelogram constructions 7 by means of a pin.

During operation, with the aid of the fan provided at the front side of the tractor there is conveyed seed material supplied from the container 51A, having e.g. a supplying mechanism that is driven by the ground wheel 54 rolling over the ground, via the pipes 51 towards the respective distributing mechanisms 49, whereafter via the flexible tubes 48 and the seed pipes 46 it is introduced into the freshly cultivated soil by means of the sowing shoes. With the aid of the above-described implement it is possible to cultivate in one operating run in an effective manner a comparatively wide (approximately 6 ms) strips of soil and to sow same at the same time. As stated above, for the purpose of transportation it is possible to insert the locking pin for the parallelogram constructions 7. Then, after the assembly has been lifted over some distance, the outer frame portions of the frame beam 1 can be folded about the pins 2 extending in the direction of operative travel A by means of the hydraulical adjusting cylinders 4. In doing so, the respective distributing mechanisms 49 are positioned side by side, so that they do not constitute an impediment to a compactly folded position. The frame 52 provided at the front side of the tractor can be lifted by means of a separate lifting hitch, so that the whole can be transported.

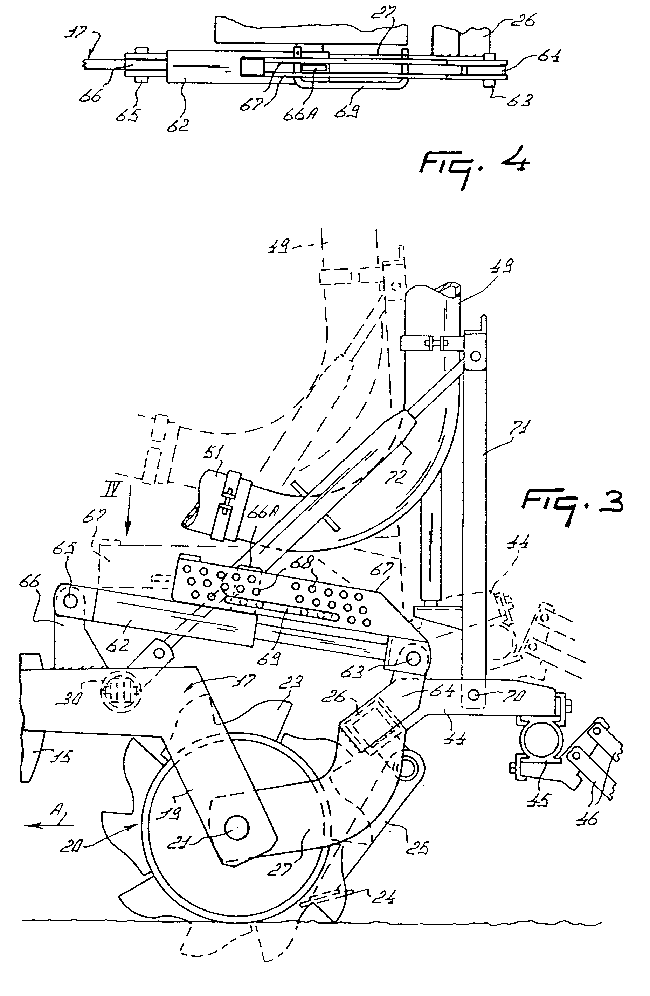

Figures 3 and 4 illustrate an embodiment wherein there is arranged an adjusting cylinder 62 instead of the rods 28 between the carrier or beam 26 for the scrapers and the arm 17 constituting part of the carrier construction for the roller 20.

In this connection, at the side of the carrier 26 there is arranged pivotably at an upwardly extending lug 64 the piston rod of the adjusting cylinder 62 by means of a fork-like portion and a pin 63. The housing of said adjusting cylinder is arranged pivotably at an upwardly extending lug 66 on the upper side of the arm 17 by means of a pin 65. The upper side of said housing of the adjusting cylinder 62 includes a stop 66A located between two plate-shaped portions 67, which portions are attached to the end of the piston rod. In two places, the plate-shaped portions are provided with three rows of superjacent apertures 68. Into said apertures 68 may be inserted the legs of a brace 69, which legs can be secured by means of a split pin (Figure 4). The legs of the brace 69 serve as stops for co-operation with the stops 66A, the arrangement being such that hereby the stroke of the adjusting cylinder 62 can be limited.

In this embodiment, the distributing mechanisms 49 are arranged pivotably relative to the bracket 44 by means of a transverse shaft 70 extending at least substantially in the horizontal direction. Between the upper side of a support 71 for the distributing mechanism 49 and the cross beam 30 there is provided an adjusting rod 72, the ends of which are arranged pivotably to the support 71 and the cross beam 30, respectively. By means of said adjusting rod 72 forming adjusting means it can be ensured that, during operation, the distributing mechanism 49 assumes an at least substantially vertical position, which is of importance for a proper distribution of the seed material to be introduced into the soil. Besides, prior to the machine being brought into a transport position in the above-described manner, the distributing mechanism 49 can be pivoted rearwardly about the shaft 70 located at the lower side by means of said adjusting rod 72, so that, when the outer frame portions of the frame beam 1 are folded upwardly, the distributing mechanisms do not contact other machine parts. With the aid of the adjusting cylinders 62 forming adjusting members and being provided between the carrier or beam 26 and the arms 17, upon turning at the head of the field the carrier 26 can be pivoted about the shafts 21 of the roller 20, as a result of which said carrier with the brackets 44 and the seed pipes arrives into the position as indicated by dash lines (Figure 3). In doing so, this pivotal movement is limited by the rear leg of the brace 69. The lifting of the implement during turning at the head of the field prevents the seed pipes from being distorted and/or clogged with soil. The front leg of the brace 69 ensures that, when the implement is brought into the working position again, the carrier 26 is returned to the same position as before, so that the same sowing depth can be maintained. It is also possible to change the sowing depth by means of the brace 69, i.e. by removing the front leg thereof further towards the rear an increase in sowing depth will be obtained.

## Claims

1. A soil cultivating machine for the preparation of a seed bed, comprising a seed container (51A) and a central frame portion, to which two carrier beams (45) are coupled, each carrying a set of seed pipes (46), which carrier beams are pivotable about horizontal axes (2) extending in the direction of operative travel (A) between an operative and an inoperative position, and which carrier beams (45), in said operative position, are aligned horizontally and extend transversely to the direction of operative travel A, said machine further being provided with two distributing mechanisms (49), each being connected to said container (51A) by means of a supply tube (51) and each being capable of distributing seed through flexible tubes (48) to one of the sets of seed pipes (46) of a respective carrier beam (45), characterized in that each distributing mechanism (49) is pivotally associated to one of said carrier beams (45) by means of a pivot axis (70) which extends parallel to the carrier beam (45), and in that adjusting means (72) are provided for tilting said distribution mechanism (49) about said pivot axis (70) in a direction perpendicular to its associated carrier beam (45) so as to enable said carrier beam (45) being raised into its substantially vertical transport position without the distributing mechanisms (49) contacting other machine parts.

2. A soil cultivating machine as claimed in claim 1, characterized in that a distributing mechanism (49) comprises a circular distributing part and, perpendicularly thereto, a tubular part connected to the bottom of the said circular part, and flexible tubes (48) connecting the circular distributing part with the seed pipes (46).

3. A soil cultivating machine as claimed in claim 1 or 2, characterized in that a distributing mechanism (49) is connected to a seed container (51A) by means of a further flexible tube (51) connected to the tubular part of the distributing mechanism (49).

4. A soil cultivating machine as claimed in any one of the preceding claims, characterized in that each carrier beam (45) is coupled to a respective lateral frame portion, which lateral frame portion is pivotably connected to the central frame portion.

5. A soil cultivating machine as claimed in any one of the preceding claims, characterized in that each distributing mechanism (49) is coupled to a respective lateral frame portion.

6. A soil cultivating machine as claimed in any one of the preceding claims, characterized in that a distributing mechanism (49) can be adjusted around the respective pivot shaft (70) by means of an adjusting rod (72) extending between a part of the distributing mechanism (49), said part being located at some distance above the pivot shaft (70), and a frame part (30) of the machine.

7. A soil cultivating machine as claimed in any one of the preceding claims, characterized in that the distributing mechanisms (49) are, taken in a direction transversely to the direction of operative travel (A), each disposed at a different distance relative to a mirror plane between the two carrier beams (45).

8. A soil cultivating machine as claimed in any one of the preceding claims, characterized in that the machine comprises a rotary harrow (8) disposed in front of the seed pipes (46) and connected to the frame parts laterally connected to the central frame part.

## Patentansprüche

1. Bodenbearbeitungsmaschine zur Bereitung eines Saatbettes, mit einem Saatgutbehälter (51A) und einem mittleren Gestellteil, an dem zwei Tragbalken (45) angebracht sind, die jeweils eine Gruppe von Särohren (46) tragen, wobei die Tragbalken um sich in Arbeitsrichtung (A) erstreckende horizontale Achsen (2) zwischen einer Arbeitslage und einer Ruhelage zu verschwenken und in ihrer Arbeitslage horizontal und quer zur Arbeitsrichtung (A) ausgerichtet sind, und wobei die Maschine ferner zwei Verteiler (49) aufweist, die jeweils mittels eines Zuführungsrohres (51) mit dem Behälter (51A) verbunden und geeignet sind, durch Schläuche (48) hindurch einer der Gruppen von Särohren (46) eines zugehörigen Tragbalkens (45) Saatgut zuzuführen,
dadurch gekennzeichnet, daß jeder Verteiler (49) mit einem der Tragbalken (45) um eine Schwenkachse (70) schwenkbar verbunden ist, die sich parallel zu dem Tragbalken (45) erstreckt, und daß eine Stellvorrichtung (72) vorgesehen ist, mittels der der Verteiler (49) in zu seinem Tragbalken (45) senkrechter Richtung um die Schwenkachse (70) zu schwenken ist, so daß der Tragbalken (45) in seine im wesentlichen vertikale Transportlage anzuheben ist, ohne daß die Verteiler (49) andere Teile der Maschine berühren.

2. Bodenbearbeitungsmaschine nach Anspruch 1,
dadurch gekennzeichnet, daß ein Verteiler (49) einen kreisrunden Verteilerteller und einen senkrecht zu diesem angeordneten rohrförmigen Teil aufweist, der mit dem Boden des kreisrunden Verteilertellers verbunden ist, sowie Schläuche (48), die den kreisrunden Verteilerteller mit den Särohren (46) verbinden.

3. Bodenbearbeitungsmaschine nach Anspruch 1 oder 2,
dadurch gekennzeichnet, daß ein Verteiler (49) mit einem Saatgutbehälter (51A) mittels einer weiteren Leitung (51) verbunden ist, der an den rohrförmigen Teil des Verteilers (49) angeschlossen ist.

4. Bodenbearbeitungsmaschine nach einem der vorhergehenden Ansprüche,
dadurch gekennzeichnet, daß jeder Tragbalken (45) mit einem zugehörigen seitlichen Gestellteil verbunden ist, der mit dem mittleren Gestellteil schwenkbar verbunden ist.

5. Bodenbearbeitungsmaschine nach einem der vorhergehenden Ansprüche,
dadurch gekennzeichnet, daß jeder Verteiler (49) mit einem zugehörigen seitlichen Gestellteil verbunden ist.

6. Bodenbearbeitungsmaschine nach einem der vorhergehenden Ansprüche,
dadurch gekennzeichnet, daß ein Verteiler (49) um die zugehörige Schwenkachse (70) mittels einer Stellstange (72) einzustellen ist, die sich zwischen einem in einigem Abstand über der Schwenkachse (70) angeordneten Teil des Verteilers (49) und einem Gestellteil (30) der Maschine erstreckt.

7. Bodenbearbeitungsmaschine nach einem der vorhergehenden Ansprüche,
dadurch gekennzeichnet, daß die Verteiler (49) quer zur Arbeitsrichtung (A) betrachtet jeweils in unterschiedlichem Abstand zu einer zwischen den beiden Tragbalken (45) verlaufenden Spiegelebene angeordnet sind.

8. Bodenbearbeitungsmaschine nach einem der vorhergehenden Ansprüche,
dadurch gekennzeichnet, daß die Maschine eine Kreiselegge (8) aufweist, die vor den Särohren (46) angeordnet und mit den seitlichen Gestellteilen verbunden ist, welche mit dem mittleren Gestellteil verbunden sind.

## Revendications

1. Machine pour travailler le sol pour la préparation d'un lit de semis, comprenant un récipient à semences (51A) et une partie de châssis centrale à laquelle sont couplées deux poutres porteuses (45) portant chacune un groupe de tuyaux à semences (46), ces poutres porteuses étant pivotantes autour d'axes (2) horizontaux s'étendant dans le sens de marche (A) du travail, entre une position de travail et une position de repos, ces poutres porteuses (45) étant, dans ladite position de travail, alignées horizontalement en s'étendant transversalement au sens de marche A du travail, ladite machine étant en outre pourvue de deux mécanismes distributeurs (49) reliés chacun audit récipient (51A) au moyen d'un tube d'alimentation (51), chacun d'eux étant capable de distribuer des semences par des tubes flexibles (48) à un des groupes de tuyaux à semences (46) d'une poutre porteuse (45) respective, **caractérisée** en ce que chaque mécanisme distributeur (49) est associé de manière pivotante à une desdites poutres porteuses (45) au moyen d'un axe de pivotement (70) parallèle à la poutre porteuse (45), et en ce que des moyens de réglage (72) sont prévus pour faire basculer ledit mécanisme distributeur (49) autour dudit axe de pivotement (70) dans un sens perpendiculaire à sa poutre porteuse (45) associée, de manière à permettre à ladite poutre porteuse (45) d'être relevée dans sa position de transport sensiblement verticale sans que les mécanismes distributeurs (49) viennent en contact avec d'autres parties de la machine.

2. Machine pour travailler le sol selon la revendication 1, caractérisée en ce qu'un mécanisme distributeur (49) comprend un élément distributeur circulaire et, perpendiculairement à cet élément, un élément tubulaire relié au fond dudit élément circulaire, et des tubes flexibles (48) reliant l'élément distributeur circulaire aux tuyaux à semences (46).

3. Machine pour travailler le sol selon la revendication 1 ou 2, caractérisée en ce qu'un mécanisme distributeur (49) est relié à un récipient à semences (51A) au moyen d'un autre tube flexible (51) relié à la partie tubulaire du mécanisme distributeur (49).

4. Machine pour travailler le sol selon l'une quelconque des revendications précédentes, caractérisée en ce que chaque poutre porteuse (45) est couplée à une partie de châssis latérale respective, laquelle partie de châssis latérale est reliée de manière pivotante à la partie centrale du châssis.

5. Machine pour travailler le sol selon l'une quelconque des revendications précédentes, caractérisée en ce que chaque mécanisme distributeur (49) est couplé à une partie de châssis latérale respective.

6. Machine pour travailler le sol selon l'une quelconque des revendications précédentes, caractérisée en ce qu'un mécanisme distributeur (49) peut être réglé autour de l'axe de pivotement (70) respectif au moyen d'une barre de réglage (72) s'étendant entre une partie du mécanisme distributeur (49), ladite partie étant située à une certaine distance au dessus de l'arbre de pivotement (70), et une partie (30) du châssis de la machine.

7. Machine pour travailler le sol selon l'une quelconque des revendications précédentes, caractérisée en ce que les mécanismes distributeurs (49) sont disposés chacun, en étant vu dans un sens transversal au sens de marche (A) du travail, à une distance différente par rapport à un plan de symétrie entre les deux poutres porteuses (45).

8. Machine pour travailler le sol selon l'une quelconque des revendications précédentes, caractérisée en ce que la machine comprend une herse rotative (8) disposée en avant des tuyaux à semences (46) et reliée aux parties du châssis reliées latéralement à la partie centrale du châssis.
